# EUROPEAN PATENT APPLICATION

(11) **EP 4 439 916 A1**
(43) Date of publication of application: **02.10.2024**
(21) Application number: 23211640.0
(22) Date of filing: 23.11.2023
(51) Int. Cl.: H02J 7/00

(54) **METHOD FOR CONNECTING BATTERY RACK IN PARALLEL, BATTERY MANAGEMENT SYSTEM, DEVICE AND STORAGE MEDIUM**

(30) Priority: 31.03.2023 CN 202310355171
(71) Applicant: Sungrow Power Supply Co., Ltd., Hefei, Anhui 230088 (CN)
(72) Inventor: HAN, Chen, Hefei, Anhui 230088 (CN); SHAO, Junwei, Hefei, Anhui 230088 (CN); LI, Qing, Hefei, Anhui 230088 (CN); ZHAO, Yunfei, Hefei, Anhui 230088 (CN); LIANG, Dongyu, Hefei, Anhui 230088 (CN); HU, Yongbing, Hefei, Anhui 230088 (CN)
(74) Representative: Zacco Norway AS

(57) **Abstract**

A method for connecting battery racks in parallel, a battery management system, a device and a storage medium are provided according to the present disclosure. The method includes: determining at least two battery racks to be connected in parallel and respective total voltages of cells for the at least two battery racks; determining a target battery rack among the at least two battery racks based on the respective total voltages of cells, and enabling the target battery rack to connect to a first battery rack in parallel, wherein the first battery rack has been connected in parallel; in a case that the first battery rack is in a charging mode or in a discharging mode, determining a parallel output voltage of a parallel circuit constructed by connecting the target battery rack and the first battery rack in parallel, and performing a current reduction processing on the first battery rack based on the parallel output voltage; for each of remaining of the at least two battery racks to be connected in parallel, in a case that the respective total voltage of cells and the parallel output voltage meet a parallel connection condition, enabling the battery rack to complete a parallel connection by closing a relay. With the method for connecting battery racks in parallel disclosed by the present disclosure, it can connect the battery racks in parallel rapidly and safely.

## Description

### FIELD

The present disclosure relates to the technical field of battery management, and in particular to a method for connecting battery racks in parallel, a battery management system, a device and a storage medium.

### BACKGROUND

In a battery management system (BMS), due to differences in battery module capacity and warehouse storage time when leaving the factory, the BMS system may generate a large voltage difference when each battery rack is connected in parallel, causing system circulating current. If the circulating current is greater than a certain threshold, it can impact a normal switching of a parallel system. In a worse scenario, it can trigger failures, causing the multi-machine system to malfunction, which compromises the experience of the user.

In conventional technology, there are three following solutions to the system circulating current generated in a case that multiple battery racks are integrated into the BMS system.

In a first solution, the total voltage value of the system to be connected in parallel is manually adjusted. The disadvantage is that it requires professional charging and discharging devices. As a result, it not only increases a cost of additional components, but also manually adjusts a total battery voltage, which is unreliable.

In a second solution, the relay of the parallel-connectable battery system is controlled to be closed through a communication link between SMU and CMU to realize a parallel connection of multiple batteries. The disadvantage is that adding SMU not only increases the hardware cost but also increases the size of the product for small household storage systems, which is not aesthetically pleasing and simple.

In a third solution, the difference between the terminal voltage of the battery collected by CMU and the terminal voltage of the inverter is obtained, in a case that a voltage difference range is met, the relay of the battery system is closed. The disadvantage is that due to the influence of the charging and discharging conditions of the inverter, there is a risk that several groups of battery systems cannot be connected for a long time, and the voltage difference gradually increases during the charging and discharging process, making it impossible to switch; secondly, in a case that the inverter charges and discharges the battery system with the closed relay, if the remaining to-be-closed battery systems detect that the voltage at the battery side and the voltage at the inverter side meet the voltage difference threshold for parallel connection, it can cause the relay to be closed with load, which damages the relay and undermine the service life of the components.

### SUMMARY

A method for connecting battery racks in parallel, a battery management system, a device and a storage medium are provided according to the present disclosure, to connect the battery racks into the BMS system rapidly and safely.

According to one aspect of the present disclosure, a method for connecting battery racks in parallel is provided. The method includes:
determining at least two battery racks to be connected in parallel and respective total voltage for the at least two battery racks;
determining, based on the respective total voltages of cells, a target battery rack among the at least two battery racks, and enabling the target battery rack to connect to a first battery rack in parallel, wherein the first battery rack has been connected in parallel;
in a case that the first battery rack is in a charging mode or in a discharging mode, determining a parallel output voltage of a parallel circuit constructed by connecting the target battery rack and the first battery rack in parallel, and performing a current reduction processing on the first battery rack based on the parallel output voltage; and
for each of remaining of the at least two battery racks to be connected in parallel, in a case that the respective total voltage of cells and the parallel output voltage meet a parallel connection condition, enabling the battery rack to complete a parallel connection by closing a relay.

In an embodiment, the determining, based on the respective total voltages of cells, the target battery rack among the at least two battery racks includes:
sorting the respective total voltages of cells in descending order; and
determining a battery rack with a minimum total voltage of cells among the at least two battery racks as the target battery rack.

In an embodiment, the enabling the target battery rack to complete the parallel connection includes:
determining a battery rack with a minimum battery rack address among the at least two battery racks as a host battery rack; and
controlling, through the host battery rack, the target battery rack to be charged, and enabling, after completing charging, the target battery rack to complete the parallel connection by closing a relay of the target battery rack.

In an embodiment, in a case that the first battery rack is in the charging mode, the performing the current reduction processing on the first battery rack based on the parallel output voltage includes:
comparing the parallel output voltage with the respective total voltages of cells;
in a case that any total voltage of cells is greater than the parallel output voltage, and a voltage difference between the total voltage of cells and the parallel output voltage is less than or equal to a first threshold, sending a current reduction request to an energy storage converter; and
reducing, by the energy storage converter, a charging current of the charging battery rack.

In an embodiment, in a case that the first battery rack is in the discharging mode, the performing the current reduction processing on the first battery rack based on the parallel output voltage includes:
comparing the parallel output voltage with the respective total voltages of cells;
in a case that any total voltage of cells is less than the parallel output voltage, and the voltage difference is less than or equal to the first threshold, sending a current reduction request to the energy storage converter; and
reducing, by the energy storage converter, a discharging current of the discharge battery rack.

In an embodiment, in a case that the first battery rack is in the charging mode, the parallel connection condition includes: the respective total voltage of cells is less than the parallel output voltage; and in a case that the first battery rack is in the discharging mode, the parallel connection condition includes: the respective total voltage of cells is greater than the parallel output voltage.

In an embodiment, the method further includes:
in a case that a current of the first battery rack is less than a parallel circulating current, and differences between the respective total voltages of cells and the parallel output voltage are less than a second threshold, controlling the remaining of the at least two battery racks to be connected in parallel to complete the parallel connection in ascending order of the total voltages of cells.

In an embodiment, the method further includes:
in a case that the current of the first battery rack is less than the parallel circulating current and a difference between at least one total voltage of cells in the respective total voltages of cells and the parallel output voltage is greater than or equal to the second threshold, charging the remaining of the at least two battery racks to be connected in parallel until each difference between the respective total voltage of cells and the parallel output voltage is less than the second threshold, and controlling the remaining of the at least two battery racks to be connected in parallel to complete the parallel connection.

In an embodiment, the controlling the remaining of the at least two battery racks to be connected in parallel to complete the parallel connection includes:
for each of remaining of the at least two battery racks to be connected in parallel, in a case that the respective total voltage of cells is less than the parallel output voltage, completing the parallel connection by closing the relay.

According to another aspect of the present disclosure, a battery management system is provided. The battery management system includes: a battery management unit, a main control module and an energy storage converter; where,
the battery management unit is arranged in at least two battery racks to be connected in parallel, and configured to determine respective total voltages of cells for the at least two battery racks to be connected in parallel, and send the respective total voltages of cells to the main control module; and
the main control module is configured to determine a target battery rack among the at least two battery racks based on the respective total voltages of cells, and control the target battery rack to connect to a first battery rack in parallel, wherein the first battery rack has been connected in parallel;
where the main control module is further configured to determine a parallel output voltage of a parallel circuit constructed by connecting the target battery rack and the first battery rack in parallel in a case that the first battery rack is in a charging mode or in a discharging mode, and send a current reduction request to the energy storage converter based on the parallel output voltage, to enable the energy storage converter to perform a current reduction processing on the first battery rack in response to the current reduction request;
the main control module is further configure to: for each of remaining of the at least two battery racks to be connected in parallel, control, in a case that the respective total voltage of cells and the parallel output voltage meet a parallel connection condition, a relay to be closed, to enable the remaining of the at least two battery racks to be connected in parallel to complete a parallel connection.

In an embodiment, the main control module is further configured to:
sort the respective total voltages of cells in descending order; and
determine a battery rack with a minimum total voltage of cells among the at least two battery racks as the target battery rack.

In an embodiment, the main control module is further configured to:
determine a battery rack with a minimum battery rack address among the at least two battery racks as a host battery rack; and
control, through the host battery rack, the target battery rack to be charged, and enabling, after completing charging, the target battery rack to complete the parallel connection by closing a relay of the target battery rack.

In an embodiment, the main control module is further configured to:
in a case that the first battery rack is in the charging mode,
compare the parallel output voltage with the respective total voltages of cells;
in a case that any total voltage of cells is greater than the parallel output voltage, and a voltage difference between the total voltage of cells and the parallel output voltage is less than or equal to a first threshold, send a current reduction request to an energy storage converter, to enable the energy storage converter to reduce a charging current of the first battery rack.

In an embodiment, the main control module is further configured to:
in a case that the first battery rack is in the discharging mode,
compare the parallel output voltage with the respective total voltages of cells;
in a case that any total voltage of cells is less than the parallel output voltage, and the voltage difference is less than or equal to the first threshold, send a current reduction request to the energy storage converter, to enable the energy storage converter to reduce a discharging current of the first battery rack.

In an embodiment, in a case that the first battery rack is in the charging mode, the parallel connection condition includes: the respective total voltage of cells is less than the parallel output voltage; and in a case that the first battery rack is in the discharging mode, the parallel connection condition includes: the respective total voltage of cells is greater than the parallel output voltage.

In an embodiment, the main control module is further configured to: in a case that a current of the first battery rack is less than a parallel circulating current, and differences between the respective total voltages of cells and the parallel output voltage are less than a second threshold, controlling the remaining of the at least two battery racks to be connected in parallel to complete the parallel connection in ascending order of the total voltages of cells.

In an embodiment, the main control module is further configured to: in a case that the current of the first battery rack is less than the parallel circulating current and a difference between at least one total voltage of cells in the respective total voltages of cells and the parallel output voltage is greater than or equal to the second threshold, charging the remaining of the at least two battery racks to be connected in parallel until each difference between the respective total voltage of cells and the parallel output voltage is less than the second threshold, and controlling the remaining of the at least two battery racks to be connected in parallel to complete the parallel connection.

In an embodiment, the main control module is further configured to: for each of remaining of the at least two battery racks to be connected in parallel, in a case that the respective total voltage of cells is less than the parallel output voltage, completing the parallel connection by closing the relay.

According to another aspect of the present disclosure, an electronic device is provided. The electronic device includes:
at least one processor; and
a memory communicatively connected to the at least one processor;
where, the memory stores a computer program executable by the at least one processor, and the computer program, when executed by the at least one processor, causes the at least one processor to implement the method for connecting battery racks in parallel according to any embodiment of the present disclosure.

According to another aspect of the present disclosure, a computer readable storage medium is provided. The computer readable storage medium stores computer instructions. The computer instructions, when executed by a processor, implement the method for connecting battery racks in parallel according to any embodiment of the present disclosure.

In the method for connecting battery racks in parallel provided according to the embodiments of the present disclosure, first, at least two battery racks to be connected in parallel and their respective total voltages of cells are determined, and then the target battery rack is determined among the at least two battery racks based on the respective total voltages of cells, to enable the target battery rack to complete a parallel connection, i.e., to enable the target battery rack to connect to a first battery rack in parallel, wherein the first battery rack has been connected in parallel. In a case that a battery rack that has been connected in parallel (e.g., a first battery rack) is in the charging mode or discharging mode, the parallel output voltage of the parallel circuit is determined, a current reduction processing is performed on the first battery rack based on the parallel output voltage. Finally, for each battery rack in at least two battery racks, in a case that the respective total voltage of cells and the parallel output voltage meet the parallel connection condition, enable the battery rack to complete a parallel connection by closing a relay. Where, in a case that the battery rack that has been connected in parallel is in the charging mode, the charging/discharging battery rack is the charging battery racks, and in a case that the battery rack that has been connected in parallel is in the discharge mode, the charging/discharging battery rack is the discharged battery rack. In the method for connecting battery racks in parallel provided in the embodiments of the present disclosure, by dividing different scenarios where battery racks are connected in parallel, and determining the condition of parallel connection according to the different scenarios respectively, each battery rack can be connected to the system fast, which can eliminate a large circulation current caused by paralleling the battery racks blindly. In this way, the safety and stability of the system are improved, and the service life of components is increased. In addition, parallel connection of battery racks in the charging mode and discharging mode can still be achieved.

It should be understood that the description in this section is not intended to identify key or important features of the embodiments of the present disclosure, nor is it intended to limit the scope of the present disclosure. Other features of the present disclosure will become easily understood from the following description.

### BRIEF DESCRIPTION OF THE DRAWINGS

In order to more clearly illustrate the technical solutions in the embodiments of the present disclosure, the drawings needed to be used in the description of the embodiments are briefly introduced below. Obviously, the drawings in the following description are only some embodiments of the present disclosure. For those of ordinary skilled in the art, other drawings can also be obtained based on these drawings without exerting creative efforts.
Figure 1 is a flow chart of a method for connecting battery racks in parallel according to a first embodiment of the present disclosure;
Figure 2 is an overall flow chart of a method for connecting battery racks in parallel according to a first embodiment of the present disclosure;
Figure 3 is a flow chart of a method for connecting battery racks in parallel according to a second embodiment of the present disclosure;
Figure 4 is a schematic diagram of a process of connecting a target battery rack in parallel according to a second embodiment of the present disclosure;
Figure 5 is a schematic structural diagram of a battery management system according to a third embodiment of the present disclosure;
Figure 6 is a schematic structural diagram of an electronic device that implements a method for connecting battery racks in parallel according to a fourth embodiment of the present disclosure.

### DETAILED DESCRIPTION OF EMBODIMENTS

In order to enable those skilled in the art to better understand the solutions of the present disclosure, the technical solutions in the embodiments of the present disclosure are clearly and completely described below in conjunction with the accompanying drawings in the embodiments of the present disclosure. Obviously, the described embodiments are only some embodiments of the present disclosure, rather than all embodiments. Based on the embodiments of the present disclosure, all other embodiments obtained by those of ordinary skilled in the art without creative efforts should fall within the scope of protection of the present disclosure.

It should be noted that the terms "first", "second", and the like in the description and claims of the present disclosure and the above-mentioned drawings are used to distinguish similar objects and are not necessarily used to describe a specific order or sequence. It should understood that the data used can be interchangeable under appropriate circumstances so that the embodiments of the present disclosure described herein are capable of being practiced in sequences other than those illustrated or described herein. In addition, the terms "including" and "having" and any variations thereof are intended to cover non-exclusive inclusions, for example, a process, method, system, product or device that includes a series of steps or units is not necessarily limited to those explicitly listed. Rather, the process, method, system, product or device may include other steps or elements not expressly listed or inherent to the process, method, product or device.

### First Embodiment

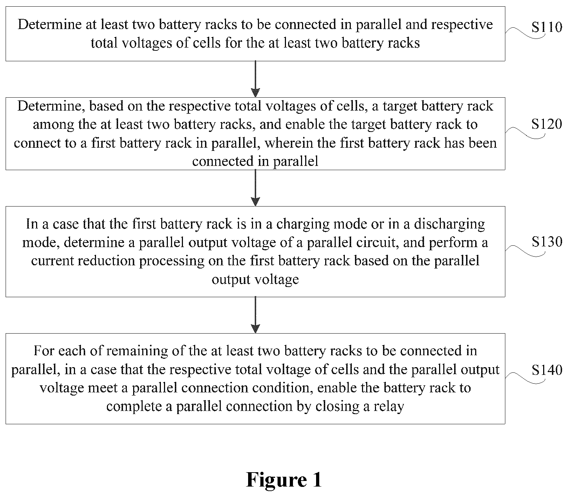

Figure 1 is a flow chart of a method for connecting battery racks in parallel according to a first embodiment of the present disclosure. The embodiment may be applied to a case where the battery racks to be connected in parallel are connected into a battery management system. The method may be implemented by the battery management system. As shown in Figure 1, the method includes as follows.

In step S110, at least two battery racks to be connected in parallel, and respective total voltages of cells for the at least two battery racks are determined.

Where, a battery rack (RACK) is a battery assembly in which battery cells are connected in series, parallel, series-parallel or the like and can operate independently after being connected to an energy storage converter and ancillary facilities. Each battery rack may be composed of multiple battery packs (PACKs), and each battery pack may be composed of multiple cells(cells). The total voltage of cells is a sum of voltages of cells in the battery rack.

A battery management system (BMS) is generally divided into three levels of architecture.
1. A battery management unit (BMU): it is built into the battery pack, with functions such as cell voltage and temperature sampling, passive equalization, and the like; it is a BMS at a battery pack (PACK) level; a software-free design is used; communication and control functions are realized through a differential UART daisy chain.
2. CMU: it is built into a switch box, with functions such as SOC calculation, PACK BMS control, and the main power circuit on/off control, which is a BMS at a battery rack (RACK) level.
3. SMU: it is built into a direct current distribution cabinet, with functions such as environmental monitoring (optional), RACK BMS control, and main power circuit on/off control, which is a BMS at a system (SYSTEM) level.

Where, one CMU may be connected to multiple BMUs, each BMU is set in one battery module PACK, and multiple PACKs form a battery rack RACK. In a BMS, there are generally multiple RACKs. After closing a main circuit relay in the RACK, the RACK is connected to the system, i.e., the BMS and connected in parallel with other RACKs in the system.

In one embodiment, a battery rack to be connected in parallel is the battery rack that requires parallel connection, and the total voltages of cells may be calculated based on the voltages of cells contained in the battery rack.

In step S120, a target battery rack in at least two battery racks is determined based on the respective total voltages of cells, and the target battery rack is enabled to complete a parallel connection.

Where, the target battery rack is one of the battery racks determined from at least two battery racks to be connected in parallel. During the process of connecting the battery racks in parallel, the relay of the target battery rack is first closed, to make it run and complete the parallel connection. In other words, the process of completing the parallel connection is to enable the target battery rack to be connected in parallel with the battery rack(s), e.g., a first battery rack, that have been connected in parallel in the BMS.

In one embodiment, the target battery rack may be determined based on the total voltages of the battery racks to be connected in parallel. For example, the battery rack with a lowest or highest total voltage of cells among the battery racks to be connected in parallel may be determined as the target battery.

In step S130, in a case that a battery rack, e.g., the first battery rack, that has been connected in parallel is in the charging mode or discharging mode, a parallel output voltage of the parallel circuit is determined, and a current reduction processing is performed on the charging/discharging battery rack, e.g., the first battery rack, based on the parallel output voltage. Where, the parallel circuit is constructed by connecting the target battery rack and the first battery rack in parallel.

Where, in a case that the battery rack, e.g., the first battery rack, that has been connected in parallel is in the charging mode, the charging/discharging battery rack is a charging battery rack; in a case that the battery rack that has been connected in parallel is in the discharging mode, the charging/discharging battery rack is a discharging battery rack.

In one embodiment, after the target battery rack has been connected in parallel, in a case that there is a battery rack, e.g., the first battery rack, that has been connected in parallel in the charging mode or discharging mode in the BMS system, the energy storage converter (PCS) forces it to charge or discharge with high power at this time, a corresponding charging current or discharging current can be reduced in a case that a current reduction condition is met. The battery rack that has been connected in parallel in the charging mode or discharging mode may be battery racks other than the target battery rack that has completed the parallel connection in the previous step.

In an embodiment, in a case that the battery rack, e.g., the first battery rack, that has been connected in parallel is in the charging mode, a current reduction request may be sent to the PCS in a case that the current reduction condition is met, and the PCS controls the charging battery rack to continue charging with a smaller current. Similarly, in a case that the battery rack that has been connected in parallel is in the discharging mode, the discharging current of the discharged battery rack may also be reduced by sending a current reduction request to the PCS in a case that the current reduction condition is met.

In step S140, for each of remaining of the at least two battery racks to be connected in parallel, in a case that the respective total voltage of cells and the parallel output voltage meet the parallel connection condition, the battery rack is enabled to complete a parallel connection by closing a relay.

Where, the parallel output voltage is a voltage of the battery rack at the output side after parallel connection, which may be obtained by collecting a PCS terminal voltage with an AD sampler.

In one embodiment, after the current reduction of the charging/discharging battery rack (e.g., the first battery rack) is completed, in the charging mode, each battery rack to be connected in parallel may determine whether the parallel connection conditions is met based on the voltage difference between the total voltage of cells and the parallel output voltage; and in a case that the parallel connection conditions is met, the relay is closed to complete the parallel connection. In other words, the process of completing the parallel connection is to enable the battery rack to be connected in parallel with the battery rack(s) that have been connected in parallel in the BMS.

In an embodiment, in a case that the battery rack that has been connected in parallel is in the charging mode, the parallel connection condition may be: the corresponding total voltage of cells is less than the parallel output voltage; in a case that the battery rack that has been connected in parallel is in the discharging mode, the parallel connection condition may be: the corresponding total voltage of cells is greater than the parallel output voltage.

In an embodiment, the parallel output voltage is set as Uₐ, and the total voltage of cells of the battery rack to be closed is set as U_{b}; in the charging mode, the parallel condition of each battery rack to be connected in parallel is U_{b}<Uₐ; in the discharging mode, the parallel connection condition of each battery rack to be connected in parallel is U_{b}>Uₐ.

Furthermore, in a case that the currents of the battery rack that has been connected in parallels are less than the parallel circulating current, and the difference between each total voltage of cells and the parallel output voltage is less than the second threshold, then at least two battery racks to be connected in parallel are controlled to complete the parallel connection in ascending order of the total voltages of cells, i.e., from the minimum total voltage of cells to the maximum total voltage of cells.

In one embodiment, in a case that the battery rack that has been connected in parallel is not in the charging mode or discharging mode, each battery rack is in a static or low current state, i.e., the current of the battery rack that has been connected in parallel is less than the parallel circulating current. In this case, it may be determined whether the voltage difference between the total voltage of cells of each battery rack to be connected in parallel and the parallel output voltage meets the parallel connection condition, i.e., whether the difference between the total voltage of cells of each battery rack to be connected in parallel and the parallel output voltage is less than the second threshold is determined. In a case that the above condition is met, the battery racks to be connected in parallel may be connected in parallel in ascending order of the total voltages of cells, i.e., from the minimum total voltage of cells to the maximum total voltage of cells. Where, the specific value of the second threshold may be set according to actual needs.

Furthermore, in a case that the current of the battery rack, e.g., a first battery rack, that has been connected in parallel is less than the parallel circulating current, and among the total voltages of cells, there is at least one total voltage of cells where the difference between the total voltage of cells and the parallel output voltage is greater than or equal to the second threshold, then the at least two battery racks to be connected in parallel are charged until the difference between each total voltage of cells and the parallel output voltage is less than the second threshold, and the battery rack that has not been connected in parallel is controlled to complete parallel connection.

In one embodiment, in a case that the current of the battery rack that has been connected in parallel is less than the parallel circulating current, but the voltage difference between the total voltage of cells of each battery rack to be connected in parallel and the parallel output voltage does not meet the parallel connection condition, i.e., the voltage difference between the total voltage of cells of at least one battery rack to be connected in parallel and the parallel output voltage is greater than or equal to the second threshold. In this case, the PCS may be requested to start emergency charging from the battery rack with the lowest total voltage of cells until the difference between each total voltage of cells and the parallel output voltage is less than the second threshold, and then the battery rack that has not been connected in parallel are enabled to complete the parallel connection.

In an embodiment, the PCS charges the battery racks with the small current.

In an embodiment, the method of controlling the battery rack that has not been connected in parallel to complete parallel connection may include: for each battery rack that has not been connected in parallel, e.g. the remaining of the at least two battery racks to be connected in parallel, in a case that the corresponding total voltage of cells is less than the parallel output voltage, the parallel connection is completed by closing the relay.

In one embodiment, after the above emergency charging step is completed, for each battery rack that has not been connected in parallel, in a case that its own total voltage of cells is less than the parallel output voltage, the relay may be closed to complete the parallel connection.

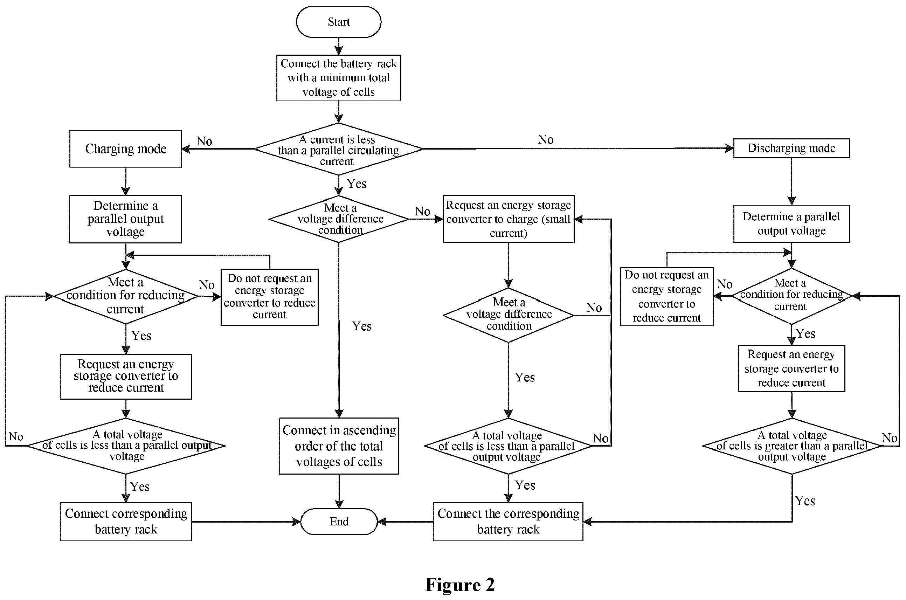

Figure 2 is an overall flow chart of a method for connecting battery racks in parallel according to an embodiment of the present disclosure. As shown in Figure 2, the battery rack with the minimum total voltage of cells is first connected to the system to complete the parallel connection, whether the battery rack that has been connected in parallel is in the charging mode or discharging mode is determined based on the current of the battery rack. In the charging mode, whether it meets a condition for reducing the current of the charging battery rack is determined based on the parallel output voltage. In a case that the condition is met, the energy storage converter (PCS) is requested to reduce the current. Then, after the total voltage of cells of the battery rack that has not been connected in parallel is less than the parallel output voltage, the battery rack is connected to the system. The discharging mode is similar to the charging mode except that the final parallel condition of the battery rack is that the total voltage of cells is greater than the parallel output voltage. In a case that the battery rack that has been connected in parallel is not in the charging or discharging mode, whether the voltage difference between each battery rack to be connected in parallel and the parallel output voltage meets the voltage difference condition is determined. In a case that the voltage differences are less than a set threshold, then the battery racks are connected to the system in ascending order of the total voltages of cells, i.e., from the minimum total voltage of cells to the maximum total voltage of cells. In a case that the voltage difference condition is not met, the PCS is requested to charge with the small current, until the difference between each total voltage of cells and the parallel output voltage is less than the set threshold, and each battery rack that has not been connected in parallel, e.g., each of the remaining of the at least two battery racks to be connected in parallel, is connected to the system in a case that the respective total voltage of cells is less than the parallel output voltage.

In the method for connecting battery racks in parallel provided in the embodiment of the present disclosure, first, determining at least two battery racks to be connected in parallel and their respective total voltages of cells, and then determining a target battery rack from the at least two battery racks based on each total voltage of cells, and completing the parallel connection of the target battery rack. In a case that the battery rack that has been connected in parallel is in a charging mode or discharging mode, determining the parallel output voltage of the parallel circuit, performing current reduction processing on the charging/discharging battery rack based on the parallel output voltage, and finally, for each battery rack in at least two battery racks, in a case that the total voltage of cells and the parallel output voltage meet the parallel connection condition, completing the parallel connection by closing a relay. Where, in a case that the battery rack that has been connected in parallel is in the charging mode, the charging/discharging battery rack is a charging battery rack, and in a case that the battery rack that has been connected in parallel is in the discharging mode, the charging/discharging battery rack is discharging battery rack. In the method for connecting battery racks in parallel provided in the embodiment of the present disclosure, by dividing different scenarios where battery racks are connected in parallel, and determining the condition of parallel connection according to the different scenarios respectively, each battery rack can be connected to the system fast, which can eliminate a large circulation current caused by paralleling the battery racks blindly. In this way, the safety and stability of the system are improved, and the service life of components is increased. In addition, parallel connection of battery racks in the charging mode and discharging mode can still be achieved.

### Second Embodiment

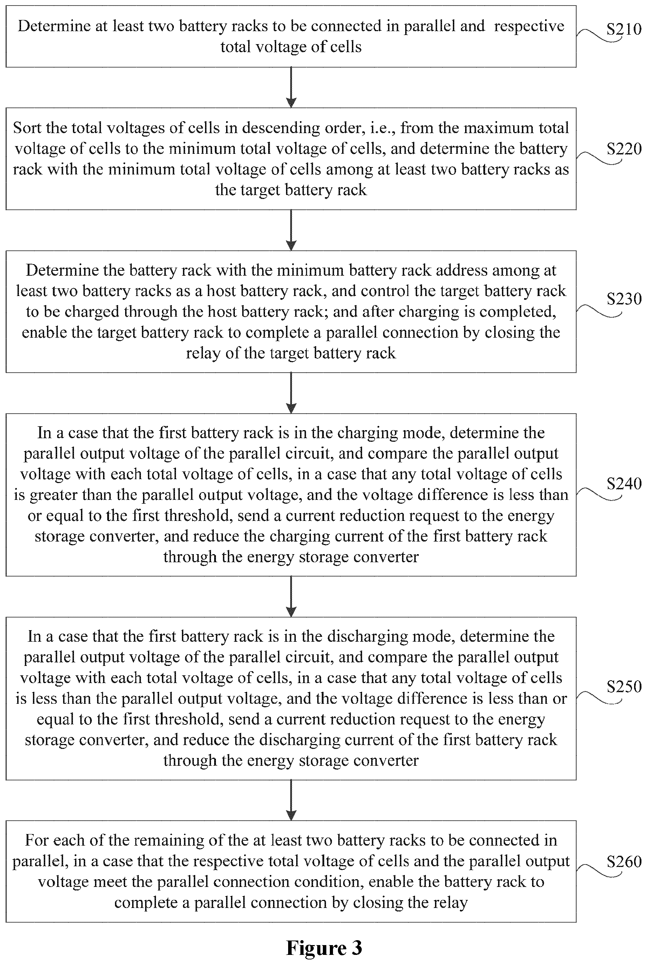

Figure 3 is a flow chart of a method for connecting battery racks in parallel according to a second embodiment of the present disclosure. In this embodiment, the above embodiment is refined. As shown in Figure 3, the method includes as follows.

In step S210, at least two battery racks to be connected in parallel, and respective total voltages of cells for at least two battery racks to be connected in parallel are determined.

Where, a battery rack (RACK) is a battery assembly in which battery cells are connected in series, parallel, series-parallel or the like and can operate independently after being connected to an energy storage converter and ancillary facilities. Each battery rack may be composed of multiple battery packs (PACKs), and each battery pack may be composed of multiple cells (cells). The total voltage of cells is a sum of voltages of cells in the battery rack.

In an embodiment, the battery racks to be connected in parallel are battery racks that require parallel connection, and their respective total voltages of cells can be calculated based on the voltages of cells contained in the battery rack.

In step S220, the total voltages of cells are sorted in descending order, i.e., from the maximum total voltage of cells to the minimum total voltage of cells, and the battery rack with the minimum total voltage of cells among the at least two battery racks is determined as the target battery rack.

Where, the target battery rack is the very first battery rack to complete a parallel connection among the battery racks to be connected in parallel.

In this embodiment, the method of determining the target battery rack may be to determine the battery rack with the minimum total voltage of cells as the target battery rack based on the total voltages of cells for the battery racks to be connected in parallel.

In an embodiment, the battery rack with the minimum total voltage of cells among the battery racks to be connected in parallel may be determined by sorting.

In step S230, the battery rack with the minimum battery rack address among at least two battery racks is determined as a host battery rack, control the target battery rack to be charged through the host battery rack. After charging is completed, the target battery rack is enabled to complete a parallel connection by closing the relay of the target battery rack.

In this embodiment, the target battery rack may be connected in parallel by: first, selecting one battery rack among the battery racks to be connected in parallel as the host battery rack, and using the host battery rack to control the parallel connection of the target battery rack.

In an embodiment, the host battery rack may be the battery rack with the minimum address among the battery racks to be connected in parallel. In the embodiment, there may be multiple methods of determining the battery rack, and it does not limit the host battery rack to the battery rack with the minimum address. After the host battery rack is determined, the charging of the target battery rack may be controlled through the host battery rack. After the charging is completed, the target battery rack enables the relay to be closed. In this way, it can connect to the system to complete the parallel connection.

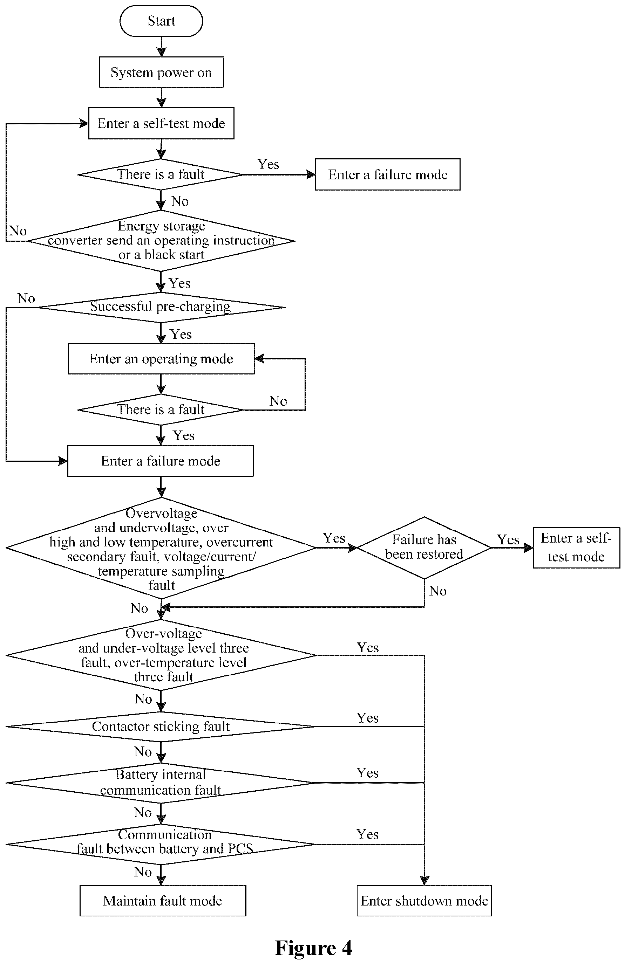

Figure 4 is a schematic diagram of a process of connecting a target battery rack in parallel according to an embodiment of the present disclosure. As shown in Figure 4, after the target battery rack is determined, the battery rack is powered on, and then a self-test mode is entered. In a case that there is no fault, operating instructions are send to the target battery rack or the target battery rack is directly black started through the energy storage converter, and the target battery rack starts pre-charging. After successful pre-charging, the target battery rack enters the operating mode. In a case that there is a fault, it enters a failure mode for troubleshooting. It enters the corresponding self-test mode, failure mode or shutdown based on troubleshooting results.

In step S240, in a case that the battery rack, e.g., a first battery rack, that has been connected in parallel is in the charging mode, the parallel output voltage of the parallel circuit is determined, and the parallel output voltage is compared with each total voltage of cells, in a case that any total voltage of cells is greater than the parallel output voltage, and the voltage difference is less than or equal to the first threshold, a current reduction request is sent to the energy storage converter, and the charging current of the charging battery rack (e.g., the first battery rack) is reduced through the energy storage converter.

In this embodiment, in the charging mode, the current reduction process is performed on the charging battery rack, i.e., the condition for reducing the charging current of the charging battery rack may be that the total voltage of cells of any battery rack to be connected in parallel is greater than the parallel output voltage, and the voltage difference is less than or equal to the first threshold. In a case that the above conditions are met, the charging current of the charging battery rack may be reduced through the energy storage converter.

Where, the specific value of the first threshold may be set according to actual needs.

In step S250, in a case that the battery rack, e.g., a first battery rack, that has been connected in parallel is in the discharging mode, the parallel output voltage of the parallel circuit is determined, and the parallel output voltage is compared with each total voltage of cells. In a case that any total voltage of cells is less than the parallel output voltage, and the voltage difference is less than or equal to the first threshold, a current reduction request is sent to the energy storage converter, and the discharging current of the discharging battery rack (e.g., the first battery rack) is reduced through the energy storage converter.

In this embodiment, in the discharging mode, the discharge battery rack is subjected to current reduction processing, i.e., the condition for reducing the discharge current of the discharging battery rack may be that the total voltage of cells of any battery rack to be connected in parallel is less than the parallel output voltage, and the voltage difference is less than or equal to the first threshold. In a case that the above conditions are met, the discharging current of the discharging battery rack may be reduced through the energy storage converter.

In step S260, for each of remaining of the at least two battery racks to be connected in parallel, in a case that the corresponding total voltage of cells and the parallel output voltage meet the parallel connection condition, the parallel connection is completed by closing the relay.

Furthermore, in a case that the battery rack e.g., a first battery rack, that has been connected in parallel is in the charging mode, the parallel connection condition includes: the corresponding total voltage of cells is less than the parallel output voltage; in a case that the battery rack that has been connected in parallel is in the discharging mode, the parallel connection condition includes: the corresponding total voltage of cells is greater than the parallel output voltage.

In this embodiment, after the current reduction process is performed on the charging battery rack or the discharging battery rack, in the case of charging, when the total voltage of cells of the battery rack to be connected in parallel is less than the parallel output voltage, the battery rack may be connected to the system; In the case of discharging, when the total voltage of cells of the battery rack to be connected in parallel is greater than the parallel output voltage, the battery rack may be connected to the system.

In the method for connecting battery racks in parallel provided by the embodiment of the present disclosure, first, at least two battery racks to be connected in parallel and their respective total voltages of cells are determined, and then the total voltages of cells are sorted in descending order. The battery rack with the minimum total voltage of cells among at least two battery racks is determined as the target battery rack, and then the battery rack with the minimum battery rack address among at least two battery racks is determined as the host battery rack, where the target battery rack is controlled to charge through the host battery rack. After charging, the parallel connection is completed by closing the relay of the target battery rack. In a case that the battery rack that has been connected in parallel is in the charging mode, the parallel output voltage of the parallel circuit is determined, and the parallel output voltage is compared with each total voltage of cells. In a case that any total voltage of cells is greater than the parallel output voltage, and the voltage difference is less than or equal to the first threshold, a current reduction request is sent to the energy storage converter, and the charging current of the charging battery rack is reduced through the energy storage converter; in a case that the battery rack that has been connected in parallel is in the discharging mode, the parallel output voltage of the parallel circuit is determined, the parallel output voltage is compared with each total voltage of cells. In a case that any total voltage of cells is less than the parallel output voltage, and the voltage difference is less than or equal to the first threshold, a current reduction request is sent to the energy storage converter, The discharging current of the discharging battery rack is reduced through the energy storage converter. Finally, for each of the at least two battery racks to be connected in parallel, in a case that the corresponding total voltage of cells and the parallel output voltage meet the parallel connection condition, the parallel connection is completed by closing the relay. In the method for connecting battery racks in parallel provided by the embodiment of the present disclosure, for two scenarios, i.e., the charging mode and discharging mode, the charging/discharging battery rack is subjected to current reduction processing in a case that the current reduction conditions are met, and then it is determined whether each to-be-connected battery rack meets the parallel connection condition, which can enable the battery racks to be connected in parallel in the charging mode and discharging mode, and ensure the safety and stability of the system.

### Third Embodiment

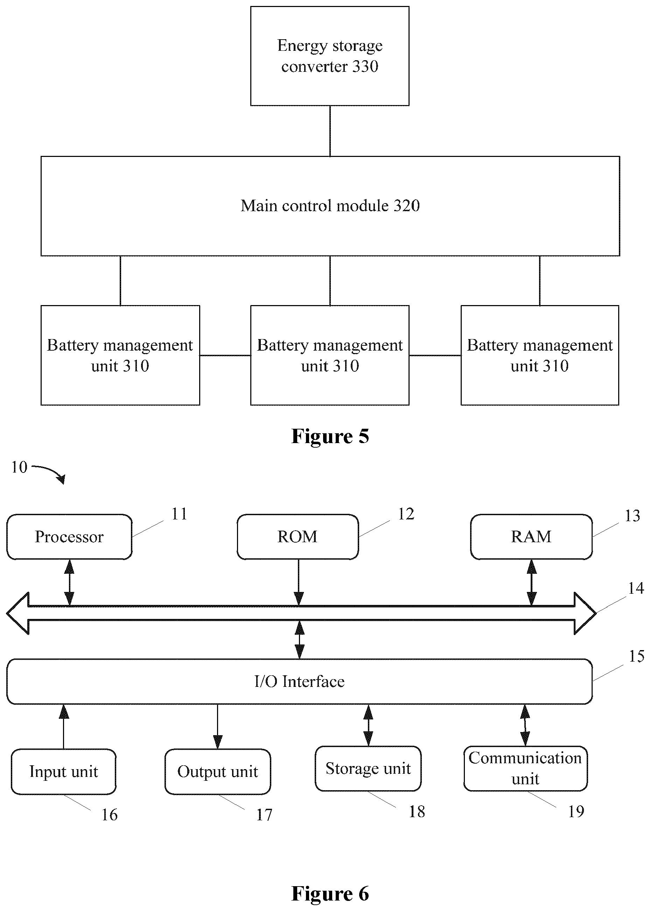

Figure 5 is a schematic structural diagram of a battery management system according to a third embodiment of the present disclosure. As shown in Figure 5, the system includes: a battery management unit 310, a main control module 320 and an energy storage converter 330.

The battery management unit 310 is arranged in the at least two battery racks to be connected in parallel, and is configured to determine the total voltages of cells for the at least two battery racks to be connected in parallel, and send the total voltages of cells to the main control module 320.

The main control module 320 is configured to determine a target battery rack among the at least two battery racks based on the total voltages of cells, and control the target battery rack to connect to a first battery rack in parallel, where the first battery rack has been connected in parallel.

In a case that the first battery rack is in a charging mode or discharging mode, the main control module 320 determines a parallel output voltage of a parallel circuit constructed by connecting the target battery rack and the first battery rack in parallel, and sends a current reduction request to the energy storage converter 330 based on the parallel output voltage, so that the energy storage converter 330 performs current reduction processing on the first battery rack in response to the current reduction request.

For each of remaining of the at least two battery racks to be connected in parallel, in a case that the respective total voltage of cells and the parallel output voltage meet a parallel connection condition, the main control module 320 controls a relay to be closed to complete the parallel connection of at least two battery racks to be connected in parallel.

In an embodiment, the main control module 320 is further configured to: sort the total voltages of cells of the battery racks in descending order, i.e., from the maximum total voltage of cells to the minimum total voltage of cells; determine a battery rack with a minimum total voltage of cells among the at least two battery racks as a target battery rack.

In an embodiment, the main control module 320 is further configured to: determine a battery rack with a minimum battery rack address among the at least two battery racks as a host battery rack; controlling the target battery rack to be charged through the host battery rack; after completing charging, completing the parallel connection by closing the relay of the target battery rack.

In an embodiment, in a case that the first battery rack that has been connected in parallel is in the charging mode, the main control module 320 is further configured to: compare the parallel output voltage with the respective total voltages of cells; in a case that any total voltage of cells is greater than the parallel output voltage, and a voltage difference is less than or equal to a first threshold, send a current reduction request to an energy storage converter 330 to enable the energy storage converter 330 to reduce a charging current of a charging battery rack.

In an embodiment, in a case that the first battery rack that has been connected in parallel is in the discharging mode, the main control module 320 is further configured to: compare the parallel output voltage with the respective total voltage of cells; in a case that any total voltage of cells is less than the parallel output voltage, and a voltage difference is less than or equal to a first threshold, send a current reduction request to an energy storage converter 330; to enable the energy storage converter 330 to reduce a discharging current of a discharging battery rack.

In an embodiment, in a case that the first battery rack that has been connected in parallel is in the charging mode, the parallel connection condition includes: the respective total voltage of cells is less than the parallel output voltage; in a case that the battery rack that has been connected in parallel is in the discharge mode, the parallel connection condition includes: the respective total voltage of cells is greater than the parallel output voltage.

In an embodiment, the main control module 320 is configured to: in a case that a current of the first battery rack that has been connected in parallel is less than a parallel circulating current, and differences between the respective total voltages of cells and the parallel output voltage are less than a second threshold, control the remaining of the at least two battery racks to be connected in parallel to complete the parallel connection in ascending order of the total voltages of cells.

In an embodiment, the main control module 320 is further configured to: in a case that the current of the first battery rack that has been connected in parallel is less than the parallel circulating current and a difference between at least one total voltage of cells in the respective total voltages of cells and the parallel output voltage is greater than or equal to the second threshold, charge the remaining of the at least two battery racks to be connected in parallel until each difference between the respective total voltage of cells and the parallel output voltage is less than the second threshold, and control the battery racks to be connected in parallel to complete the parallel connection.

In an embodiment, the main control module 320 is further configured to: for each battery rack that has not been connected in parallel, complete the parallel connection by closing the relay, in a case that the total voltage of cells is less than the parallel output voltage.

The battery management system according to an embodiment of the present disclosure can implement the method for connecting battery racks in parallel according to any embodiment of the present disclosure, which has corresponding functional modules and beneficial effects for implementing the method.

### Fourth Embodiment

Figure 6 shows a schematic structural diagram of an electronic device 10 that can implement embodiments of the present disclosure. The electronic device is intended to refer to various forms of a digital computer, such as a laptop computer, a desktop computer, a workstation, a personal digital assistant, a server, a blade server, a mainframe computer, and other suitable computers. The electronic device may also represent various forms of a mobile device, such as a personal digital processor, a cellular phone, a smartphone, a wearable device (e.g., a helmet, glasses, a watch and the like), and other similar computing devices. The components shown herein, their connections and relationships, and their functions are examples only and are not intended to limit the implementation of the present disclosure described and/or claimed herein.

As shown in Figure 6, the electronic device 10 includes at least one processor 11, and a memory communicatively connected to the at least one processor 11, such as a read-only memory (ROM) 12, a random access memory (RAM) 13, and the like, where the memory stores a computer program executable by at least one processor. The processor 11 may perform various appropriate actions and processes according to a computer program stored in a read-only memory (ROM) 12 or loaded from a storage unit 18 into a random access memory (RAM) 13. In the RAM 13, various programs and data required for the operation of the electronic device 10 may also be stored. The processor 11, the ROM 12 and the RAM 13 are connected to each other via a bus 14. An input/output (I/O) interface 15 is also connected to bus 14.

Multiple components in the electronic device 10 are connected to the I/O interface 15, including: an input unit 16, such as a keyboard, a mouse, and the like; an output unit 17, such as various types of displays, speakers, and the like; a storage unit 18, such as a magnetic disk, an optical disk, and the like; and a communication unit 19, such as a network card, a modem, a wireless communication transceiver and the like. The communication unit 19 allows the electronic device 10 to exchange information/data with other devices through computer network such as the Internet and/or various telecommunication networks.

The processor 11 may be various general and/or special processing components having processing and computing capabilities. Some embodiments of the processor 11 include, but are not limited to, a central processing unit (CPU), a graphics processing unit (GPU), various dedicated artificial intelligence (AI) computing chips, various processors that running machine learning model algorithms, digital signal processing processor (DSP), and any appropriate processor, controller, microcontroller, and the like. The processor 11 performs the various methods and processes described above, such as the method for connecting battery racks in parallel.

In one embodiment, the method for connecting battery racks in parallel may be implemented as a computer program, which is tangibly included in a computer-readable storage medium, such as the storage unit 18. In one embodiment, part or all of the computer program may be loaded and/or installed into the electronic device 10 via the ROM 12 and/or the communication unit 19. In a case that the computer program is loaded into RAM 13 and executed by processor 11, one or more steps of connecting battery racks in parallel described above can be performed. Alternatively, in other embodiments, the processor 11 may be configured to perform the method for connecting battery racks in parallel in any other suitable manner (e.g., by means of firmware).

Various implementations of the systems and techniques described above may be implemented in a digital electronic circuit system, integrated circuit system, field programmable gate array (FPGA), application specific integrated circuit (ASIC), application specific standard products (ASSP), systems on a chip implemented in a system (SOC), load programmable logic device (CPLD), computer hardware, firmware, software, and/or a combination thereof. These various embodiments may include: implementing in one or more computer programs. The one or more computer programs may execute and/or interpret on a programmable system including at least one programmable processor. The programmable processor may be a special purpose or general purpose programmable processor that may receive data and instructions from a storage system, at least one input apparatus, and at least one output apparatus, and transmit data and instructions to the storage system, the at least one input apparatus, and the at least one output apparatus.

Computer programs for implementing the methods of the present disclosure may be written in any combination of one or more programming languages. These computer programs may be provided to a processor of a general purpose computer, a special purpose computer, or other programmable data processing device, causing the computer program, when executed by the processor, to implement the functions/operations specified in the flowchart and/or block diagrams to be implemented. A computer program may execute entirely on the machine, partly on the machine, as a stand-alone software package, partly on the machine and partly on a remote machine or entirely on the remote machine or server.

In the context of the present disclosure, a computer-readable storage medium may be a tangible medium that may contain or store a computer program for use by or in combination with an instruction execution system, apparatus, or device. The computer-readable storage medium may include, but is not limited to, an electronic, magnetic, optical, electromagnetic, infrared, or semiconductor system, apparatus or device, or any suitable combination of the foregoing. Alternatively, the computer-readable storage medium may be a machine-readable signal medium. More specific examples of machine-readable storage medium may include one or more wires based electrical connection, laptop disk, hard drive, random access memory (RAM), read only memory (ROM), erasable programmable read only memory (EPROM or flash memory), optical fiber, portable compact disk read-only memory (CD-ROM), optical storage device, magnetic storage device, or any suitable combination of the above.

To provide interaction with a user, the systems and techniques described herein may be implemented on an electronic device, the electronic device includes: a display device (e.g., a CRT (cathode ray tube) or LCD (liquid crystal display) monitor) for displaying information to the user); and a keyboard and pointing device (e.g., a mouse or a trackball) through which a user can provide input to the electronic device. Other types of devices may also be configured to provide interaction with the user; for example, the feedback provided to the user may be any form of sensory feedback (e.g., visual feedback, auditory feedback, or tactile feedback), and may be provided in any form, including acoustic input, speech input, or tactile input, to receive input from the user.

The systems and techniques described herein may be implemented in a computing system that includes back-end components (e.g., as a data server), or a computing system that includes middleware components (e.g., an application server), or a computing system that includes front-end components (e.g., a user computer having a graphical user interface or web browser through which the user may interact with implementations of the systems and technologies described herein), or in a computing system including such backend components, middleware components, front-end components or any combination thereof. The components of the system may be interconnected by any form or medium of digital data communication (e.g., communication network). An embodiment of communication network includes: a local area network (LAN), a wide area network (WAN), a block chain network, and the Internet.

The computing system may include a client and a server. The client and the server are generally remote from each other and typically interact over the communication network. The relationship of client and server is created by computer programs running on corresponding computers and having a client-server relationship with each other. The server may be a cloud server, also known as a cloud computing server or cloud host. It is a host product in the cloud computing service system to solve the problems of difficult management and the defect of weak business scalability in traditional physical hosts and VPS services.

It should be understood that various forms of the process shown above may be used, with steps reordered, added or deleted. For example, each step described in the present disclosure may be executed in parallel, sequentially, or in different orders. As long as the desired results of the technical solutions of the present disclosure can be achieved, there is no limitation here.

The above-mentioned specific embodiments do not constitute a limitation on the scope of the present disclosure. It should be understood by those skilled in the art that various modifications, combinations, sub-combinations and substitutions are possible depending on design requirements and other factors. Any modifications, equivalent substitutions and improvements made within the spirit and principles of the present disclosure shall be included in the protection scope of the present disclosure.

## Claims

1. A method for connecting battery racks in parallel, comprising:
determining at least two battery racks to be connected in parallel and respective total voltages of cells for the at least two battery racks;
determining, based on the respective total voltages of cells, a target battery rack among the at least two battery racks, and enabling the target battery rack to connect to a first battery rack in parallel, wherein the first battery rack has been connected in parallel
in a case that the first battery rack is in a charging mode or in a discharging mode, determining a parallel output voltage of a parallel circuit constructed by connecting the target battery rack and the first battery rack in parallel, and performing a current reduction processing on the first battery rack based on the parallel output voltage; and
for each of remaining of the at least two battery racks to be connected in parallel, in a case that the respective total voltage of cells and the parallel output voltage meet a parallel connection condition, enabling the battery rack to complete a parallel connection by closing a relay.

2. The method according to claim 1, wherein the determining, based on the respective total voltages of cells, the target battery rack among the at least two battery racks comprises:
sorting the respective total voltages of cells in descending order; and
determining a battery rack with a minimum total voltage of cells among the at least two battery racks as the target battery rack.

3. The method according to claim 1, wherein the enabling the target battery rack to complete the parallel connection comprises:
determining a battery rack with a minimum battery rack address among the at least two battery racks as a host battery rack; and
controlling, through the host battery rack, the target battery rack to be charged, and enabling, after completing charging, the target battery rack to complete the parallel connection by closing a relay of the target battery rack.

4. The method according to claim 1, wherein in a case that the first battery rack is in the charging mode, the performing the current reduction processing on the first rack based on the parallel output voltage comprises:
comparing the parallel output voltage with the respective total voltages of cells;
in a case that any total voltage of cells is greater than the parallel output voltage, and a voltage difference between the total voltage of cells and the parallel output voltage is less than or equal to a first threshold, sending a current reduction request to an energy storage converter; and
reducing, by the energy storage converter, a charging current of the first battery rack.

5. The method according to claim 4, wherein in a case that the first battery rack is in the discharging mode, the performing the current reduction processing on the first battery rack based on the parallel output voltage comprises:
comparing the parallel output voltage with the respective total voltages of cells;
in a case that any total voltage of cells is less than the parallel output voltage, and the voltage difference is less than or equal to the first threshold, sending a current reduction request to the energy storage converter; and
reducing, by the energy storage converter, a discharging current of the first battery rack.

6. The method according to claim 5, wherein in a case that the first battery rack is in the charging mode, the parallel connection condition comprises: the respective total voltage of cells is less than the parallel output voltage; and
in a case that the first battery rack is in the discharging mode, the parallel connection condition comprises: the respective total voltage of cells is greater than the parallel output voltage.

7. The method according to claim 1, further comprising:
in a case that a current of the first battery rack is less than a parallel circulating current, and differences between the respective total voltages of cells and the parallel output voltage are less than a second threshold, controlling the remaining of the at least two battery racks to be connected in parallel to complete the parallel connection in ascending order of the total voltages of cells.

8. The method according to claim 7, further comprising:
in a case that the current of the first battery rack is less than the parallel circulating current and a difference between at least one total voltage of cells in the respective total voltages of cells and the parallel output voltage is greater than or equal to the second threshold, charging the remaining of the at least two battery racks to be connected in parallel until each difference between the respective total voltage of cells and the parallel output voltage is less than the second threshold, and controlling the remaining of the at least two battery racks to be connected in parallel to complete the parallel connection.

9. The method according to claim 8, wherein the controlling the remaining of the at least two battery racks to be connected in parallel to complete the parallel connection comprises:
for each of remaining of the at least two battery racks to be connected in parallel, in a case that the respective total voltage of cells is less than the parallel output voltage, completing the parallel connection by closing the relay.

10. A battery management system, comprising: a battery management unit, a main control module and an energy storage converter; wherein,
the battery management unit is arranged in at least two battery racks to be connected in parallel, and configured to determine respective total voltages of cells for the at least two battery racks to be connected in parallel, and send the respective total voltages of cells to the main control module; and
the main control module is configured to determine a target battery rack among the at least two battery racks based on the respective total voltages of cells, and control the target battery rack to connect to a first battery rack in parallel, wherein the first battery rack has been connected in parallel;
wherein the main control module is further configured to determine a parallel output voltage of a parallel circuit constructed by connecting the target battery rack and the first battery rack in parallel in a case that the first battery rack is in a charging mode or in a discharging mode, and send a current reduction request to the energy storage converter based on the parallel output voltage, to enable the energy storage converter to perform a current reduction processing on the first battery rack in response to the current reduction request;
the main control module is further configure to: for each of remaining of the at least two battery racks to be connected in parallel, control, in a case that the respective total voltage of cells and the parallel output voltage meet a parallel connection condition, a relay to be closed, to enable the battery rack to complete a parallel connection.

11. An electronic device, comprising:
at least one processor; and
a memory communicatively connected to the at least one processor;
wherein the memory stores a computer program executable by the at least one processor, and the computer program, when executed by the at least one processor, causes the at least one processor to implement the method for connecting battery racks in parallel according to any one of claims 1 to 9.

12. A computer readable storage medium, wherein the computer readable storage medium stores computer instructions, and the computer instructions, when executed by a processor, implement the method for connecting battery racks in parallel according to any one of claims 1 to 9.
